# EUROPÄISCHE PATENTSCHRIFT

(11) **EP 1 077 164 B1**
(45) Veröffentlichungstag und Bekanntmachung des Hinweises auf die Patenterteilung: **06.10.2004**
(21) Anmeldenummer: 00115259.4
(22) Anmeldetag: 14.07.2000
(51) Int. Cl.: B60S 1/34

(54) **Wischerlager**
Wiper bearing
Palier d'essuie-glace

(30) Priorität: 17.08.1999 DE 19938967
(43) Veröffentlichungstag der Anmeldung: 21.02.2001
(73) Patentinhaber: ROBERT BOSCH GMBH, 70442 Stuttgart (DE)
(72) Erfinder: Merkel, Wilfried, 77876 Kappelrodeck (DE); Daenen, Roger, 3770 Vlytingen-Riemst (BE)

(56) Entgegenhaltungen:
- DE-A- 19 805 316
- FR-A- 2 679 304
- US-A- 3 085 821
- US-A- 5 699 582
- PATENT ABSTRACTS OF JAPAN vol. 1997, no. 12, 25. Dezember 1997 (1997-12-25) & JP 09 207722 A (JIDOSHA DENKI KOGYO CO LTD), 12. August 1997 (1997-08-12)

## Beschreibung

### Stand der Technik

Die Erfindung geht aus von einem Wischerlager nach dem Oberbegriff des Anspruchs 1, siehe US 5699582 A.

Wischeranlagen mit mehreren Scheibenwischern für Kraftfahrzeuge werden mit deren Wischerlagern direkt oder indirekt über eine Platine an der Karosserie des Kraftfahrzeugs befestigt. Die Platine trägt einen Wischerantrieb mit einem Wischermotor, dessen Motorwelle über ein Gestänge Kurbeln antreibt, die mit einem Ende einer Antriebswelle für jeden Scheibenwischer fest verbunden sind. Ferner ist möglich, daß nur die Antriebswelle eines Scheibenwischers vom Wischermotor angetrieben wird, während ein anderer Scheibenwischer über ein Viergelenkhebelgetriebe mit dem ersten Scheibenwischer verbunden ist und eine Lagerachse besitzt. Die Antriebswelle bzw. die Lagerachse ist in einem Wischerlager gelagert. Im Folgenden treffen die Ausführungen zu einer Antriebswelle für eine Lagerachse sinngemäß zu, die nicht mehr ausdrücklich genannt wird.

Im Lagergehäuse ist mindestens ein radiales Lager und an den Stirnseiten zwischen dem Lagergehäuse und einem mit der Antriebswelle fest verbundenen Teil ein axiales Lager vorgesehen. Die Antriebswelle ragt aus der Karosserie und bewegt einen an ihrem freien Ende befestigten Wischarm mit einem Wischblatt über eine Windschutzscheibe. Der Wischarm besitzt in der Regel ein mit der Antriebswelle drehfest verbundenes Befestigungsteil, das gelenkig mit einem Gelenkteil verbunden ist, an das sich starr eine Wischstange anschließt. Ferner ist möglich, daß der Wischarm nicht direkt mit der Antriebswelle verbunden ist, sondern über ein Hebelgetriebe mit einem auf der Antriebswelle drehfest verbundenen Antriebshebel angetrieben wird. Die nachfolgenden Ausführungen zur Verbindung des Befestigungsteils mit der Antriebswelle gelten auch für einen Antriebshebel, der nicht mehr ausdrücklich genannt wird.

Bei bekannten Schweibenwischern weist das Befestigungsteil an einem Ende eine Lagerstelle mit einem Innenkonus auf, mit dem das Befestigungsteil bei der Montage des Wischarms in einem ersten Montageschritt auf einen entsprechend geformten Außenkonus der Antriebswelle aufgesetzt wird. Anschließend wird in einem zweiten Montageschritt auf die Antriebswelle eine Mutter geschraubt, über die das Befestigungsteil mit dem Innenkonus auf den Außenkonus der Antriebswelle aufgepreßt wird. Um zusätzlich zu einem Kraftschluß einen Formschluß zu erreichen, ist bekannt, am Konus der Antriebswelle Rändelzähne bzw. Rändelschneiden anzuformen. Über den Umfang sind je nach Durchmesser der Antriebswelle 29 bis 44 Rändelschneiden angeordnet, die in Längsrichtung der Antriebswelle ausgerichtet sind und eine dreieckige Querschnittsfläche mit einem Winkel von 90° aufweisen. Die Höhe und die Querschnittsfläche der Rändelschneiden nimmt mit zunehmendem Durchmesser des Konus zu, so daß die gesamte Mantelfläche des Konus von Rändelschneiden überdeckt ist.

### Vorteile der Erfindung

Das erfindungsgemäße Wischerlager besitzt eine Antriebswelle, die über zumindest eine Konusverbindung zwischen einem ersten und einem zweiten Bauteil direkt oder indirekt mit einem Wischarm verbunden ist. Das erste Bauteil ist aus einem härteren Material hergestellt als das zweite Bauteil und besitzt an seiner Konusmantelfläche angeformte Zähne. Die Zähne werden bei der Montage des Wischarms in das zweite Bauteil gedrückt und erzeugen neben einem Kraftschluß einen Formschluß zwischen dem ersten und dem zweiten Bauteil, wobei die Höhe der Zähne, d.h. vom Zahngrund bis zur Zahnspitze, über der Konusmantelfläche gleichbleibend ist. Die Zähne verformen bei der Montage das Material des zweiten Bauteils gleichmäßig. Das zweite Bauteil kann mit einem kleinen Anzugsmoment einer Befestigungsmutter bzw. mit einer kleinen axialen Kraft auf der gesamten Konusmantelfläche des ersten Bauteils zum Liegen gebracht werden. Ein nur teilweises Aufliegen des zweiten Bauteils auf den Spitzen der Zähne, insbesondere am unteren Bereich des Konus, kann vermieden und der Kraft- und Formschluß zwischen dem ersten und dem zweiten Bauteil kann verbessert werden. Einlegeteile, insbesondere in Kunststoffbefestigungsteilen, können vermieden werden. Ferner können kostengünstige Materialien mit geringen Wandstärken verwendet werden. Die Erfindung zeichnet sich dadurch aus, daß mit mehreren in Längsrichtung versetzt angeordneten Zähnen der Abstand zwischen zwei in Umfangsrichtung auf gleicher Höhe angeordneten Zähnen variiert und der Formschluß verbessert bzw. ein hohes zulässig übertragbares Drehmoment erreicht wird.

Insbesondere können aufgrund des geringen erforderlichen Anzugsmoments flache Befestigungsmuttern aus kostengünstigen und leichten Materialien verwendet werden, beispielsweise aus Kunststoff, Zink, Aluminium, Magnesium usw., oder durch kostengünstige Klemmverbindungen und/oder Rastverbindungen ersetzt werden.

Die Zähne können mit verschiedenen, dem Fachmann als geeignet erscheinenden Verfahren angeformt werden, wie beispielsweise durch spanloses Urformen oder Umformen, wie Walzen mit einem Rändelwerkzeug, Fließpressen, Tiefziehen bei aus Blech geformten Bauteilen oder durch spanende Verfahren, wie Fräsen, Räumen usw. Ferner können die Zähne verschiedene Formen aufweisen, wie beispielsweise pyramidenförmig, kegelförmig usw. In einer Ausgestaltung der Erfindung wird vorgeschlagen, daß die Zähne von im wesentlichen in Längsrichtung ausgerichteten Schneiden gebildet sind, die in Längsrichtung eine gleichbleibende Höhe und vorzugsweise eine gleichbleibende Querschnittsfläche aufweisen. In Längsrichtung ausgerichtete Schneiden können besonders kostengünstig hergestellt werden und bewirken einen guten Formschluß.

Mit den erfindungsgemäßen Zähnen kann eine Konusverbindung zwischen beliebigen Bauteilen zwischen der Antriebswelle und dem Wischarm verbessert werden, wie beispielsweise zwischen einem Druckstück, das auf die Antriebswelle formschlüssig aufgesteckt ist und mit einem Außenkonus über einen entsprechend geformten Innenkonus eines Befestigungsteils ein Antriebsmoment auf den Wischarm überträgt. Besonders vorteilhaft ist jedoch das erste Bauteil von der Antriebswelle gebildet bzw. besitzt die Antriebswelle einen Konus mit angeformten Zähnen. Zusätzliche Bauteile, Montageaufwand und Kosten können eingespart und insbesondere können Serienbauteile verwendet werden, die in großen Stückzahlen kostengünstig hergestellt werden. Der Wischarm kann mit einem herkömmlichen Montageverfahren besonders drehfest auf der Antriebswelle befestigt werden.

Ferner wird vorgeschlagen, daß der Abstand in Umfangsrichtung zwischen jeweils zwei Zähnen auf gleicher axialer Höhe am ersten Bauteil auf die Zugfestigkeit der verwendeten Materialien für das erste Bauteil und für das zweite Bauteil abgestimmt ist und bei abnehmender Zugfestigkeit des Materials für das zweite Bauteil relativ zur Zugfestigkeit des Materials für das erste Bauteil der Abstand zwischen den Zähnen zunimmt.

Die Abscherfestigkeit der Zähne am ersten Bauteil und des zwischen den Zähnen stehenden Materials des zweiten Bauteils kann aneinander angeglichen und insgesamt eine größtmögliche Abscherfestigkeit und ein größtmöglich übertragbares Drehmoment erreicht werden. Bei einem größeren Abstand in Umfangsrichtung können bei gleichbleibendem Durchmesser weniger Zähne am Konus angebracht werden. Sind die Zähne an einen Außenkonus einer Antriebswelle aus Stahl mit einem Nenndurchmesser unterhalb des Konus von 12 mm angeformt, die nach DIN eine Oberflächenhärte von mindesten 135 HBS bis 200 HBS aufweist, sind vorteilhaft bei einem zweiten Bauteil aus Stahl 30 bis 40 Schneiden mit einer Höhe von 0,8 bis 1,0 mm, bei einem zweiten Bauteil aus Zink oder Aluminium 20 bis 30 Schneiden mit einer Höhe von 0,7 bis 1,1 mm, bei einem zweiten Bauteil aus Magnesium 15 bis 25 Schneiden mit einer Höhe von 0,7 bis 1,1 mm und bei einem zweiten Bauteil aus Kunststoff 5 bis 15 Schneiden mit einer Höhe von 0,7 bis 2,0 mm über den Umfang der Konusmantelfläche an der Antriebswelle angeformt. Bei Antriebswellen mit einem kleineren oder einem größeren Nenndurchmesser sind entsprechend weniger oder mehr Schneiden über den Umfang angeordnet.

Ferner können durch die Form, Breite und insbesondere durch die Höhe der Zähne die zulässig maximalen Belastungen in Umfangsrichtung der Zähne und des zwischen den Zähnen stehenden Materials des zweiten Bauteils aneinander angeglichen und ein insgesamt maximal zulässig übertragbares Drehmoment erreicht werden. Vorteilhaft nimmt bei abnehmender Zugfestigkeit des Materials für das zweite Bauteil relativ zur Zugfestigkeit des Materials für das erste Bauteil die Höhe der Zähne zu.

In einer weiteren Ausgestaltung der Erfindung wird vorgeschlagen, daß die Zähne in Richtung des zweiten Bauteils abgerundet sind. Spannungsspitzen können abgebaut und die maximal zulässige Beanspruchung kann erhöht werden.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

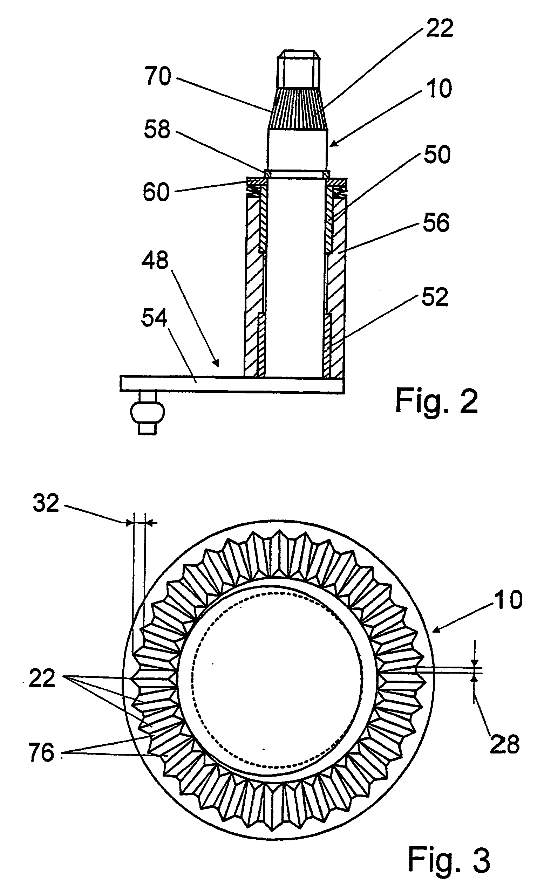

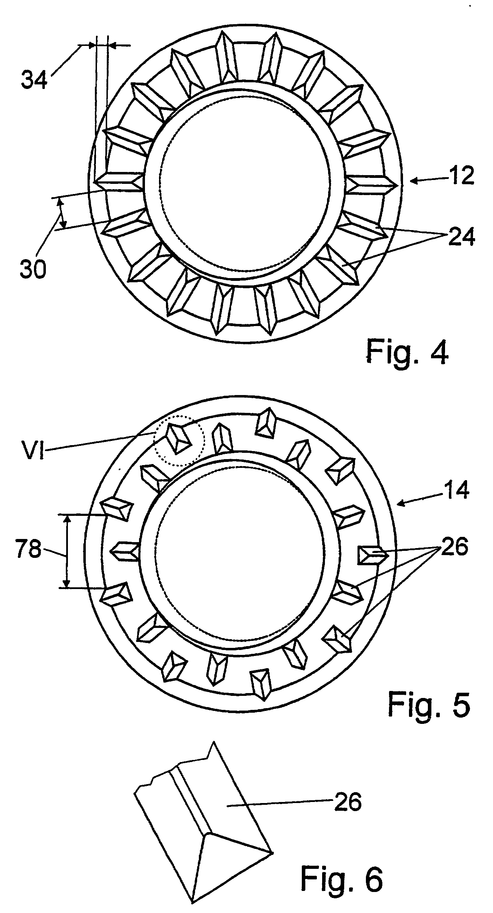

Die Ausführungsbeispiele nach Fig. 3,4 dienen lediglich illustratiren zwecken und sind nicht Bestandteil der Erfindung.

Es zeigen:
- Fig. 1: einen Ausschnitt einer Wischeranlage mit einem Wischarm im Schnitt,
- Fig. 2: einen Schnitt entlang der Linie II-II in Fig. 1 ohne Befestigungsteil,
- Fig. 3: eine vergrößerte Ansicht einer Antriebswelle von oben,
- Fig. 4: eine Variante nach Fig. 3 für ein zweites Bauteil aus einem Material mit einer geringen Zugfestigkeit,
- Fig. 5: eine Variante nach Fig. 3 mit versetzt angeordneten Rändelschneiden und dies in Übereinstimmung mit der Erfindung
- Fig. 6: einen vergrößerten Ausschnitt VI in Fig. 5.

### Beschreibung der Ausführungsbeispiele

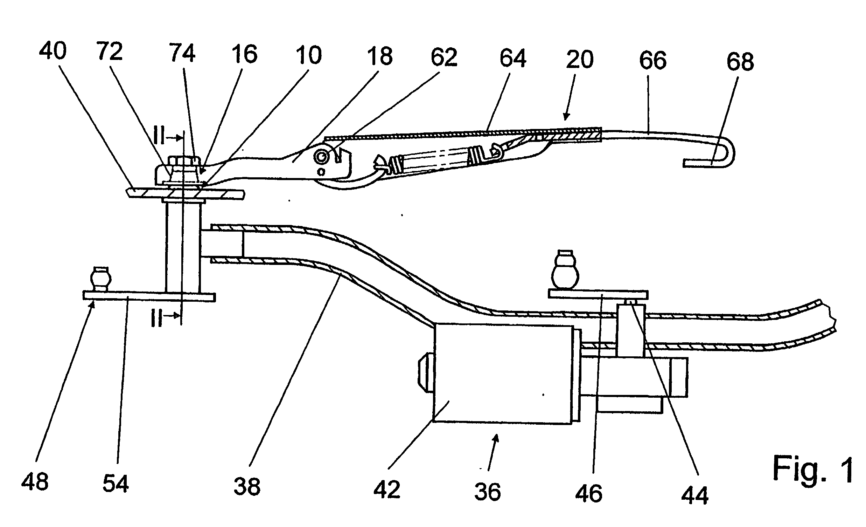

Fig. 1 zeigt einen Ausschnitt einer Wischeranlage 36 für ein Kraftfahrzeug, deren Wischerlager über eine Platine 38 an der Karosserie 40 des Kraftfahrzeugs befestigt sind. Die Platine 38 trägt einen Wischerantrieb mit einem Wischermotor 42, dessen Motorwelle 44 über eine Kurbel 46 und ein nicht näher dargestelltes Gestänge Kurbeln 48 antreibt, die jeweils mit einem Ende einer Antriebswelle 10 für einen Scheibenwischer fest verbunden sind. Die Antriebswelle 10 ist in einem Lagergehäuse 56 des Wischerlagers radial über Lagerbuchsen 50, 52 und in eine erste axiale Richtung über einen Kurbelarm 54 und in eine zweite axiale Richtung über einen Spannring 58 und einen Laufring 60 gelagert (Fig. 2). Die Antriebswelle 10 ragt aus der Karosserie 40 und bewegt einen an ihrem freien Ende befestigten Wischarm 20 mit einem nicht näher dargestellten Wischblatt über eine Windschutzscheibe (Fig. 1). Der Wischarm 20 ist mit einem Befestigungsteil 18 über eine Konusverbindung 16 auf der Antriebswelle 10 befestigt. Das Befestigungsteil 18 ist über ein Kniegelenk 62 gelenkig mit einem Gelenkteil 64 verbunden, an das sich starr eine Wischstange 66 anschließt. In die Wischstange 66 wird an einem bügelförmigen Ende 68 das Wischblatt eingehängt.

Die Antriebswelle 10 ist aus einem härteren Material als das Befestigungsteil 18 und besitzt an einem Außenkonus 70 in Wellenlängsrichtung ausgerichtete Zähne bzw. Rändelschneiden 22, die bei der Montage des Befestigungsteils 18 auf der Antriebswelle 10 in eine Mantelfläche eines Innenkonus 72 des Befestigungsteils 18 gedrückt werden und neben einem Kraftschluß einen Formschluß zwischen der Antriebswelle 10 und dem Befestigungsteil 18 herstellen (Fig. 1, 2 u. 3). Erfindungsgemäß besitzen die Rändelschneiden 22 in Längsrichtung eine gleichbleibende Höhe 32, d.h. vom Zahngrund bis zur Zahnspitze, sind untereinander gleich hoch und besitzen vorzugsweise eine gleichbleibende Querschnittsfläche. Zwischen den Rändelschneiden 22 entstehen dadurch glatte Konusmantelflächen 76.

Bei der Montage wird das Material des Befestigungsteils 18 über die Länge der Rändelschneiden 22 gleichmäßig verformt.

Das Befestigungsteil 18 kann mit einem kleinen Anzugsmoment einer Befestigungsmutter 74 bzw. mit einer kleinen axialen Kraft auf der gesamten Konusmantelfläche der Antriebswelle 10 zum Liegen gebracht werden. Ein nur teilweises Aufliegen des Befestigungsteils 18 auf den Spitzen der Rändelschneiden 22, insbesondere am unteren Bereich des Außenkonus 70, wird vermieden und es wird ein guter Kraft- und Formschluß zwischen der Antriebswelle 10 und dem Befestigungsteil 18 erreicht.

In Fig. 4 ist eine Antriebswelle 12 mit Rändelschneiden 24 für ein Befestigungsteil dargestellt, das aus einem Material mit einer geringeren Zugfestigkeit hergestellt ist als das Befestigungsteil 18, und zwar für ein Befestigungsteil aus Aluminium oder Magnesium. Der Abstand 30 zwischen den Rändelschneiden 24 ist größer als der Abstand 28 zwischen den Rändelschneiden 22 im Ausführungsbeispiel in Fig. 3. Es sind bei gleichem Durchmesser der Antriebswellen 10 und 12 weniger Rändelschneiden 24 an der Antriebswelle 12 über den Umfang angeformt. Die Abscherfestigkeit der Rändelschneiden 24 an der Antriebswelle 12 und des zwischen den Rändelschneiden 24 stehenden Materials des Befestigungsteils sind aneinander angeglichen, so daß insgesamt eine größtmögliche Abscherfestigkeit und ein größtmöglich zulässig übertragbares Drehmoment erreicht wird. Um die zulässige maximale Beanspruchung der Rändelschneiden 24 und des Materials zwischen den Rändelschneiden 24 vom Befestigungsteil aneinander anzugleichen, besitzen ferner die Rändelschneiden 24 eine größere Höhe 34 als die Rändelschneiden 22. Wie im Ausführungsbeispiel in Fig. 1 bis 3 besitzen die Rändelschneiden 24 jedoch in Längsrichtung eine gleichbleibende Höhe 34 und eine gleichbleibende Querschnittsfläche.

Fig. 5 zeigt eine Antriebswelle 14 mit in Längsrichtung mehreren versetzt angeordneten Rändelschneiden 26. Trotz einer vorteilhaft hohen Anzahl von Rändelschneiden 26, kann jeweils zwischen zwei in gleicher axialer Höhe in Umfangsrichtung angeordneten Rändelschneiden 26 ein großer Abstand 78 erreicht und insbesondere bei Befestigungsteilen aus Materialien mit geringen Zugfestigkeiten ein hohes Drehmoment übertragen werden, ohne daß das Material des Befestigungsteils abgeschert wird, beispielsweise Aluminium, Zink, Magnesium, Kunststoff usw. Um Spannungsspitzen zu vermeiden, sind die Rändelschneiden 26 in Richtung des Befestigungsteils abgerundet (Fig. 6).

### Bezugszeichen

- 10: Antriebswelle
- 12: Antriebswelle
- 14: Antriebswelle
- 16: Konusverbindung
- 18: Bauteil
- 20: Wischarm
- 22: Zahn
- 24: Zahn
- 26: Zahn
- 28: Abstand
- 30: Abstand
- 32: Höhe
- 34: Höhe
- 36: Wischeranlage
- 38: Platine
- 40: Karosserie
- 42: Wischermotor
- 44: Motorwelle
- 46: Kurbel
- 48: Kurbel
- 50: Lagerbuchse
- 52: Lagerbuchse
- 54: Kurbelarm
- 56: Lagergehäuse
- 58: Spannring
- 60: Laufring
- 62: Kniegelenk
- 64: Gelenkteil
- 66: Wischstange
- 68: Ende
- 70: Außenkonus
- 72: Innenkonus
- 74: Befestigungsmutter
- 76: Konusmantelfläche
- 78: Abstand

## Patentansprüche

1. Wischerlager mit einer Antriebswelle (10, 12, 14), die über zumindest eine Konusverbindung (16) zwischen einem ersten Bauteil und einem zweiten Bauteil (18) direkt oder indirekt mit einem Wischarm (20) verbunden ist, wobei das erste Bauteil aus einem härteren Material als das zweite Bauteil (18) hergestellt ist und an seiner Konusmantelfläche angeformte Zähne (22) aufweist, über die neben einem Kraftschluß ein Formschluß zwischen dem ersten Bauteil und dem zweiten Bauteil (18) herstellbar ist, wobei Höhe (32, 34) der Zähne (22, 24) über der Konusmantelfläche gleichbleibend ist, **dadurch gekennzeichnet, daß** in Längsrichtung mehrere gleiche Zähne (26) versetzt angeordnet sind.

2. Wischerlager nach Anspruch 1, **dadurch gekennzeichnet, daß** die Zähne von im wesentlichen in Längsrichtung ausgerichteten Schneiden gebildet sind.

3. Wischerlager nach Anspruch 1 oder 2, **dadurch gekennzeichnet, daß** das erste Bauteil von der Antriebswelle (10, 12, 14) gebildet ist.

4. Wischerlager nach dem Oberbegriff des Anspruchs 1 oder nach einem der vorhergehenden Ansprüche, **dadurch gekennzeichnet, daß** der Abstand (28, 30, 78) in Umfangsrichtung zwischen jeweils zwei Zähnen (22, 24, 26) auf gleicher axialer Höhe am ersten Bauteil auf die Zugfestigkeit der verwendeten Materialien für das erste Bauteil und für das zweite Bauteil (18) abgestimmt ist und bei abnehmender Zugfestigkeit des Materials für das zweite Bauteil (18) relativ zur Zugfestigkeit des Materials für das erste Bauteil der Abstand (28, 30, 78) zwischen den Zähnen (22, 24, 26) zunimmt.

5. Wischerlager nach Anspruch 4, **dadurch gekennzeichnet, daß** bei einer Antriebswelle (10, 12, 14) aus Stahl mit einem Nenndurchmesser unterhalb der Konusmantelfläche von ca. 12 mm und mit einer Oberflächenhärte von 135 HBS bis 200 HBS bei einem zweiten Bauteil (18) aus Stahl 30 bis 40 Schneiden (22), bei einem zwieten Bauteil aus Zink oder Aluminium 20 bis 30 Schneiden (24) und bei einem zweiten Bauteil aus Kunststoff 5 bis 15 Schneiden (26) über den Umfang der Konusmantelfläche an der Antriebswelle (10, 12, 14) angeformt sind.

6. Wischerlager nach dem Oberbegriff des Anspruchs 1 oder nach einem der vorhergehenden Ansprüche, **dadurch gekennzeichnet, dass** die Höhe (32, 34) der Zähne (22, 24) auf die Zugfestigkeit der verwendeten Materialien für das erste Bauteil und für das zweite Bauteil (18) abgestimmt ist und bei abnehmender Zugfestigkeit des Materials für das zweite Bauteil (18) relativ zur Zugfestigkeit des Materials für das erste Bauteil die Höhe (32, 34) der Zähne (22, 24) zunimmt.

7. Wischerlager nach Anspruch 6, **dadurch gekennzeichnet, daß** bei einer Antriebswelle (10, 12, 14) aus Stahl mit einem Nenndurchmesser unterhalb der Konusmantelfläche von ca. 12 mm und mit einer Oberflächenhärte von 135 HBS bis 200 HBS bei einem zweiten Bauteil (18) aus Stahl Schneiden (22) mit einer Höhe (32) zwischen 0,8 und 1,0 mm, bei einem zweiten Bauteil aus Zink oder Aluminium Schneiden (24) mit einer Höhe (34) zwischen 0,7 bis 1,1 mm, bei einem zweiten Bauteil aus Magnesium Schneiden (24) mit einer Höhe (34) zwischen, 0,7 und 1,1 mm und bei einem zweiten Bauteil aus Kunststoff Schneiden (26) mit einer Höhe (34) zwischen, 0,7 und 2,0 mm über den Umfang der Konusmantelfläche an der Antriebswelle (10, 12, 14) angeformt sind.

8. Wischerlager nach einem der vorhergehenden Ansprüche, **dadurch gekennzeichnet, daß** die Zähne (26) in Richtung des zweiten Bauteils (18) abgerundet sind.

## Claims

1. Wiper bearing having a drive shaft (10, 12, 14) which is connected directly or indirectly to a wiper arm (20) via at least one cone connection (16) between a first component and a second component (18), the first component being produced from a harder material than the second component (18) and having teeth (22) which are integrally formed on its cone surface area and via which, in addition to a frictional connection, a form-fitting connection can be produced between the first component and the second component (18), the height (32, 34) of the teeth (22, 24) being constant over the cone surface area, **characterized in that** a plurality of identical teeth (26) are arranged offset in the longitudinal direction.

2. Wiper bearing according to Claim 1, **characterized in that** the teeth are formed by edges orientated essentially in the longitudinal direction.

3. Wiper bearing according to Claim 1 or 2, **characterized in that** the first component is formed by the drive shaft (10, 12, 14).

4. Wiper bearing according to the precharacterizing clause of Claim 1 or according to one of the preceding claims, **characterized in that** the distance (28, 30, 78) in the circumferential direction between two teeth (22, 24, 26) in each case at the same axial height on the first component is matched to the tensile strength of the materials used for the first component and for the second component (18) and, with decreasing tensile strength of the material for the second component (18) relative to the tensile strength of the material for the first component, the distance (28, 30, 78) between the teeth (22, 24, 26) increases.

5. Wiper bearing according to Claim 4, **characterized in that** in a drive shaft (10, 12, 14) of steel having a nominal diameter below the cone surface area of approximately 12 mm and having a surface hardness of 135 HBS to 200 HBS, 30 to 40 edges (22) are integrally formed over the circumference of the cone surface area on the drive shaft (10, 12, 14) in the case of a second component (18) of steel, 20 to 30 edges (24) in the case of a second component of zinc or aluminium, and 5 to 15 edges (26) in the case of a second component of plastic.

6. Wiper bearing according to the precharacterizing clause of Claim 1 or according to one of the preceding claims, **characterized in that** the height (32, 34) of the teeth (22, 24) is matched to the tensile strength of the materials used for the first component and for the second component (18) and, with decreasing tensile strength of the material for the second component (18) relative to the tensile strength of the material for the first component, the height (32, 34) of the teeth (22, 24) increases.

7. Wiper bearing according to Claim 6, **characterized in that** in a drive shaft (10, 12, 14) of steel having a nominal diameter below the cone surface area of approximately 12 mm and having a surface hardness of 135 HBS to 200 HBS, edges (22) having a height (32) of between 0.8 and 1.0 mm are integrally formed over the circumference of the cone surface area on the drive shaft (10, 12, 14) in the case of a second component (18) of steel, edges (24) having a height (34) of between 0.7 to 1.1 mm in the case of a second component of zinc or aluminium, edges (24) having a height (34) of between 0.7 and 1.1 mm in the case a second component of magnesium, and edges (26) having a height (34) between 0.7 and 2.0 mm in the case of a second component of plastic.

8. Wiper bearing according to one of the preceding claims, **characterized in that** the teeth (26) are rounded in the direction of the second component (18).

## Revendications

1. Palier d'essuie-glace comportant un axe d'entraînement (10, 12, 14) qui est relié, par l'intermédiaire d'au moins une liaison conique (16) entre un premier élément de construction et un deuxième élément de construction (18), directement ou indirectement à un bras d'essuie-glace (20), dont le premier élément de construction est fabriqué en un matériau plus dur que le deuxième élément de construction (18) et présente des dents (22) formées sur sa surface d'enveloppe conique, au moyen desquelles, en plus d'une adhérence, un verrouillage par liaison de forme est réalisable entre le premier élément de construction et le deuxième élément de construction (18), la hauteur (32, 34) des dents (22, 24) au-dessus de la surface d'enveloppe conique étant constante,
**caractérisé en ce que**
plusieurs dents (26) identiques sont disposées de façon décalée dans la direction longitudinale.

2. Palier d'essuie-glace selon la revendication 1,
**caractérisé en ce que**
les dents sont formées pour l'essentiel par des crêtes orientées dans la direction longitudinale.

3. Palier d'essuie-glace selon la revendication 1 ou 2,
**caractérisé en ce que**
le premier élément de construction est formé par l'axe d'entraînement (10, 12, 14).

4. Palier d'essuie-glace selon le préambule de la revendication 1 ou selon l'une des revendications précédentes,
**caractérisé en ce que**
la distance (28, 30, 78) dans la direction périphérique, entre respectivement deux dents (22, 24,26) à la même hauteur axiale sur le premier élément de construction, est adaptée à la résistance à la traction des matériaux utilisés pour le premier élément de construction et pour le deuxième élément de construction (18), et en cas de diminution de la résistance à la traction du matériau du deuxième élément de construction (18) relativement à la résistance à la traction du matériau du premier élément de construction, la distance (28, 30, 78) entre les dents (22, 24,26) augmente.

5. Palier d'essuie-glace selon la revendication 4,
**caractérisé en ce que**
avec un axe d'entraînement (10, 12, 14) en acier ayant un diamètre nominal en dessous de la surface d'enveloppe conique d'environ 12 mm et ayant une dureté de surface de 135 HBS à 200 HBS, avec un deuxième élément de construction (18) en acier 30 à 40 lames (22), avec un deuxième élément de construction (18) en zinc ou aluminium 20 à 30 lames (24) et avec un deuxième élément de construction (18) en matière plastique, 5 à 15 crêtes (26) sont formées sur l'axe d'entraînement (10, 12, 14) sur la périphérie de la surface d'enveloppe conique.

6. Palier d'essuie-glace selon le préambule de la revendication 1 ou selon l'une des revendications précédentes,
**caractérisé en ce que**
la hauteur (32, 34) des dents (22, 24) est adaptée à la résistance à la traction des matériaux utilisés pour le premier élément de construction et pour le deuxième élément de construction (18) et, en cas de diminution de la résistance à la traction du matériau du deuxième élément de construction (18) relativement à la résistance à la traction du matériau du premier élément de construction, la hauteur des dents (22, 24) augmente.

7. Palier d'essuie-glace selon la revendication 6,
**caractérisé en ce que**
avec un axe d'entraînement (10, 12, 14) en acier ayant un diamètre nominal en dessous de la surface d'enveloppe conique d'environ 12 mm et ayant une dureté de surface de 135 HBS à 200 HBS, avec un deuxième élément de construction (18) en acier, des lames (22) ayant une hauteur (32) entre 0,8 et 1,0 mm, avec un deuxième élément de construction (18) en zinc ou aluminium, des lames (24) ayant une hauteur (34) entre 0,7 et 1,1 mm, avec un deuxième élément de construction en magnésium, des lames (24) ayant une hauteur (34) entre 0,7 et 1,1 mm, et avec un deuxième élément de construction en matière plastique, des crêtes (26) ayant une hauteur (34) entre 0,7 et 2,0 mm sont formées sur l'axe d'entraînement (10, 12, 14) sur la périphérie de la surface d'enveloppe conique.

8. Palier d'essuie-glace selon l'une des revendications précédentes,
**caractérisé en ce que**
les dents (26) sont arrondies dans la direction du deuxième élément de construction (18).
